# EUROPÄISCHE PATENTANMELDUNG

(11) **EP 0 730 236 A1**
(43) Veröffentlichungstag der Anmeldung: **04.09.1996**
(21) Anmeldenummer: 96103100.2
(22) Anmeldetag: 01.03.1996
(51) Int. Cl.: G06F 13/38, H04N 1/21

(54) **Verfahren und Schaltung zum Erfassen und Weiterleiten von Videobilddaten in einem PC**

(30) Priorität: 03.03.1995 DE 19507447
(71) Anmelder: VITRONIC Dr.-Ing. Stein Bildverarbeitungs GmbH, 65189 Wiesbaden (DE)
(72) Erfinder: Hoffmann, Burghard, Dipl.-Ing., D-65232 Taunusstein (DE); Kaleita, Jörg, Dipl.-Ing., D-65428 Rüsselsheim (DE)
(74) Vertreter: Weber, Dieter, Dr.

(57) **Zusammenfassung**

Die vorliegende Erfindung betrifft ein Verfahren und eine Schaltung zum Erfassen und Weiterleiten von Videobilddaten in einem PC mit PCI-Bus. Bei einem entsprechenden Verfahren werden die Daten mit Hilfe einer PCI-Framegrabber-Schaltung erfaßt und über den PCI-Bus im wesentlichen in Echtzeit in den Hauptspeicher des PC und/oder über eine Grafikschaltung an einen Monitor weitergeleitet. Die Daten können auch in einen anderen Speicher oder Zwischenspeicher geleitet und bei Bedarf verarbeitet werden. Um ein Verfahren und eine Schaltung zum Erfassen und Weiterleiten von Videobilddaten in einem PC zu schaffen, welche in einfacher Weise und möglichst preiswert zu realisieren sind, wird erfindungsgemäß vorgeschlagen, daß in oder vor der Framegrabberschaltung der 8 Bit breite, digitale Bilddatenstrom auf die doppelte Breite von 16 Bit gebracht wird, daß für die Aufnahme und Übertragung des 16 Bit breiten Datenstromes zum PCI-Bus ein Standard SCSI-Controller verwendet wird und daß bei der Aufnahme der Daten durch den SCSI-Controller nur der synchrone Empfangstakt verwendet wird.

## Beschreibung

Die vorliegende Erfindung betrifft ein Verfahren und eine Schaltung zum Erfassen und Weiterleiten von Videobilddaten in einem PC mit PCI-Bus. Bei einem entsprechenden Verfahren werden die Daten mit Hilfe einer PCI-Framegrabber-Schaltung erfaßt und über den PCI-Bus im wesentlichen in Echtzeit in den Hauptspeicher des PC und/oder über eine Grafikschaltung an einen Monitor weitergeleitet. Die Daten können auch in einen anderen Speicher oder Zwischenspeicher geleitet und bei Bedarf verarbeitet werden.

Eine entsprechende PCI-Framegrabber-Schaltung weist einen Videoeingang, einen A/D-Wandler mit einem zugehörigen A/D-Controller für das Umwandeln der eingehenden analogen Videosignale in digitale Signale auf, und weist außerdem ein PCI-Bus-Interface und einen Baustein auf, der die digitalisierten Videodaten so umwandelt bzw. formatiert, daß sie in den PCI-Bus übergeben bzw. von diesem abgerufen werden können.

Beispiele für Quellen von Videobilddaten sind Flächenkameras, Zeilenkameras, Röntgenbildaufnehmer, Ultraschallsensoren, Laserscanner und andere.

Entsprechende Verfahren und Vorrichtungen sind im Stand der Technik bekannt. Diese Verfahren und Vorrichtungen bzw. Framegrabber-Schaltungen ermöglichen es, ein von einer Videokamera aufgenommenes Bild in Echtzeit auf einem Monitor darzustellen. Selbstverständlich können mit Hilfe einer solchen Schaltung die Daten auch in digitaler Form auf einem beliebigen Speichermedium aufgezeichnet werden.

Ein typisches Videobild, welches gemäß einem üblichen Standard eine Auflösung von 576 x 768 Bildpunkten hat (442 368 Bildpunkte), wobei jeder Bildpunkt z. B. in 256 verschiedenen Graustufen darstellbar sein soll, hat einen Datenumfang von 442 368 Byte, da 1 Byte die gewünschte Grauabstufung in 256 Stufen bereitstellen kann. Für die Darstellung bewegter Bilder wird im allgemeinen eine Bildwechselfrequenz von mindestens 25 Bildern pro Sekunde benötigt, was einem Datentransfer von 11,06 MByte pro Sekunde entspricht. Das Verfahren und die entsprechende Vorrichtung müssen also in der Lage sein, derartige Datentransferraten ohne Komplikationen zu bewältigen. Soll ein PC zur Darstellung von Videobildern in Echtzeit verwendet werden, so kommen hierfür praktisch nur PCs mit einem sogenannten PCI-Bus-System in Frage, welches eine entsprechend hohe maximale Datentransferrate von bis zu 132 MByte pro Sekunde aufweist.

Mit einer Übertragung der Daten in Echtzeit bzw. im wesentlichen in Echtzeit ist gemeint, daß keine längeren Bildsequenzen von vielen Sekunden oder Minuten Dauer zwischengespeichert oder auf einem Aufzeichnungsmedium aufgezeichnet werden, sondern daß die Verzögerung zwischen der Aufnahme der Bilddaten und ihrer Weitergabe an eine Grafikschaltung, den Hauptspeicher oder auch von der Graphikkarte an den Monitor im Bereich von Sekundenbruchteilen liegt. Typischerweise umfaßt also die Menge der zwischengespeicherten Daten weniger als ein Bild oder nur wenige Einzelbilder, was bei einer Bildfrequenz von 25 Bildern pro Sekunde dazu führt, daß das menschliche Auge den Eindruck hat, das Videobild entspreche zu jedem Zeitpunkt im wesentlichen dem Bild, welches gerade von der Kamera aufgenommen wird, da durch die Zwischenspeicherung hervorgerufene Verzögerungen von 1/10 sec oder weniger praktisch nicht wahrgenommen werden.

Letztlich kommt es jedoch nicht auf die Echtzeitdarstellung der Videobilder an, sondern lediglich darauf, daß ein entsprechend umfangreicher Datentransfer in der angegebenen Größenordnung von 11 MByte pro Sekunde (bei höherer Auflösung entsprechend mehr) in digitalisierter Form vom Videoeingang über die Framegrabberschaltung (Bilderfassungsschaltung) und den PCI-Bus zu einer weiterer Hardwarekomponente, wie z. B. einer Graphikkarte, einem Festplattenspeicher oder dergleichen, weitergeleitet werden. Dabei erfolgt der Datenfluß kontinuierlich und kann nicht willkürlich bzw. nach Bedarf oder Aufnahmekapazität von der Schaltung gestoppt werden.

Die entsprechenden Framegrabberschaltungen weisen daher in der Regel einen speziellen, für diese Videoübertragung entwickelten Baustein auf, der als Schnittstellenbaustein zwischen den digitialisierten Videodaten einerseits und dem PCI-Bus andererseits dient. Diese Bausteine, die gegebebenenfalls auch noch Peripheriebausteine zur Steuerung und Überwachung des Datenflusses aufweisen, sind relativ aufwendig und teuer herzustellen, zumal der Bedarf zur Zeit noch relativ gering und die Stückzahlen entsprechend niedrig sind.

Gegenüber diesem Stand der Technik liegt der vorliegenden Erfindung die Aufgabe zugrunde, ein Verfahren und eine Schaltung zum Erfassen und Weiterleiten von Videobilddaten in einem PC zu schaffen, welche in einfacher Weise und möglichst preiswert zu realisieren sind. Hinsichtlich des Verfahrens wird diese Aufgabe dadurch gelöst, daß in oder vor der Framegrabberschaltung der 8 Bit breite, digitale Bilddatenstrom auf die doppelte Breite von 16 Bit gebracht wird, daß für die Aufnahme und Übertragung des 16 Bit breiten Datenstromes zum PCI-Bus ein Standard SCSI-Controller verwendet wird und daß bei der Aufnahme der Daten durch den SCSI-Controller nur der synchrone Empfangstakt verwendet wird.

Hinsichtlich der Vorrichtung bzw. Framegrabberschaltung wird die der Erfindung zugrundeliegende Aufgabe dadurch gelöst, daß der Baustein für die Formatierung der digitalisierten Daten zu PCI-kompatiblen Daten ein Standard SCSI-Controller ist, der ein Eingangsinterface mit mindestens 16 Bit Breite und einem synchronen Empfangstakt hat.

SCSI-Controller mit PCI-Interface sind Standardbausteine, die man in praktisch allen PCs mit PCI-Bus vorfindet. Sie dienen dazu, die verschiedenen Baugruppen des PC, wie z. B. dessen Festplatte, Diskettenlaufwerke, CD-ROMs etc. über den PCI-Bus mit der zentralen Prozessoreinheit (CPU) zu verbinden. Im Unterschied zu einer PCI-Framegrabberschaltung steuert dabei jedoch der SCSI-Controller selbst den Datenstrom, d. h. er greift in bestimmter Weise und nach vorgegebenen Prioritäten, Zeitfenstern etc. gezielt auf eine der angeschlossenen Baugruppen zu und steuert den Datenstrom von dieser zum PCI-Bus bzw. umgekehrt. Wie sich jedoch überraschend herausgestellt hat, kann man auch einen solchen standardmäßigen SCSI-Controller für eine PCI-Framegrabberschaltung verwenden, wenn man den digitalisierten Bilddatenstrom auf 16 Bit Breite verdoppelt und nur den synchronen Empfangstakt verwendet, wobei selbstverständlich ein SCSI-Controller verwendet werden muß, der einen mindestens 16 Bit breiten SCSI-Eingang und einen entsprechenden synchronen Empfangstakt hat.

Generell werden diese Kriterien von SCSI-Controllern mit der sogenannten Fast/Wide-Option erfüllt, wobei es im vorliegenden Fall jedoch nicht darauf ankommt, ob auch alle übrigen Spezifikationen der Fast/Wide-Option erfüllt werden, die über den synchronen Empfangstakt und die Empfangsmöglichkeit mit mindestens 16 Bit Breite hinausgehen.

Wie sich nämlich aufgrund entsprechender Versuche herausgestellt hat, ermöglicht es die Beschränkung auf den synchronen Empfangstakt, auf die Implementierung des SCSI-Protokolls des SCSI-Controllers zu verzichten. Eine solche Protokollimplementierung wäre außerordentlich aufwendig und würde auch auf Kosten der Transfergeschwindigkeit gehen, so daß eine solche normale Verwendung eines SCSI-Controllers bei der hier erforderlichen und nur begrenzt steuerbaren Datentransferrate wahrscheinlich ausgeschlossen, zumindest aber sehr aufwendig ist und deshalb bisher nicht in Betracht gezogen wurde. Daher ist eine Ausführungsform der Erfindung bevorzugt, bei welcher dieses SCSI-Protokoll bei der Datenaufnahme umgangen wird.

Darüber hinaus ist es besonders zweckmäßig, wenn der SCSI-Controller eine Erweiterungsschnittstelle aufweist, die üblicherweise für EPROMs vorgehen ist (für das Booten des PC), die aber gemäß der bevorzugten Ausführungsform der vorliegenden Erfindung für die Steuerung der Peripheriebausteine wie A/D-Wandler, A/D-Controller und Ein/Ausgabe-Baustein verwendet wird.

Als besonders geeignet für die Zwecke der vorliegenden Erfindung hat sich ein SCSI-Controller des Typs NCR 53C825 erwiesen. Dieser weist alle vorstehend genannten, bevorzugten Merkmale auf. Dabei sind in der bevorzugten Schaltung alle Steuerleitungen des SCSI-Controllers mit Ausnahme weniger Steueranschlüsse wie /SREQ , /SIO und /SACK auf ein konstantes Potential gelegt. Dies ist für diesen Baustein das schaltungstechnische Äquivalent zu dem Verzicht auf die Implementierung des für normale Anwendungen des SCSI-Controllers benötigten SCSI-Protokolls. Außer den genannten Steueransclüssen werden für die erfindingsgemäße Schaltung im Prinzip keine weiteren Steueranschlüsse des SCSI-Controllers benötigt, auch wenn es prinzipiell nicht ausgeschlossen werden muß, zur Steuerung zusätzlicher Bausteine auf der Framegrabberkarte noch weitere Steueranschlüsse zu verwenden.

Zweckmäßigerweise werden die Steuerleitungen auf ein konstantes Potential, vorzugsweise auf die Versorgungsspannung V_{cc} gelegt, am einfachsten mit Hilfe eines sogenannten Pull-up-Widerstandes, wobei die Versorgungsspannung prinzipiell einen beliebigen Wert haben kann, derzeit in der Praxis aber nur Versorgungsspannungen von 5 V oder von 3,2 V praktische Bedeutung haben.

Zweckmäßig ist es außerdem, wenn die Framegrabberschaltung für eine Verbindung mit externen Geräten, wie z. B. mit einem Blitzlichtgerät oder mit einer Kamerasteuerung ein Eingabe/Ausgabe-Baustein vorgesehen ist, der ebenfalls von der Erweiterungsschnittstelle gesteuert wird.

Das Besondere an der vorliegenden Erfindung ist die Verwendung eines an sich für andere Zwecke vorgesehenen, standardmäßigen Bausteins, welcher in großer Stückzahl hergestellt wird und entsprechend preiswert ist und welcher - in der bevorzugten Ausführungsform der Erfindung mehrfach - zweckentfremdet genutzt wird, indem z. B. die gesamte Steuerung außer Kraft gesetzt wird, nur der synchrone Empfangstakt verwendet wird und die digitalen Datenleitungen von der Videokamera her die einzigen an der SCSI-Schnittstelle angeschlossenen Datenleitungen sind, während herkömmlich eine Reihe verschiedener Baugruppen an dem SCSI-Interface liegen.

Die Verdoppelung der Breite des digitalen Datenstromes von 8 auf 16 Bit erfolgt über einen Baustein, der jedes zweite Byte auf der 8 Bit breiten digitalen Videoeingangsleitung in einen parallelen Zweig ausblendet, wobei das SCSI-Interface eingangsseitig mit der halben Frequenz der 8 Bit breiten Videodatenleitung getaktet wird, so daß immer zwei, auf der 8 Bit breiten Datenleitung aufeinanderfolgende, Bytes gleichzeitig parallel am SCSI-Interface des SCSI-Controllers aufgenommen werden.

Zuvor müssen selbstverständlich die Videobilddaten digitalisiert werden, die von einer Videokamera üblicherweise zunächst in analoger Form geliefert werden. Es versteht sich, daß eine solche Digitalisierung von Analogdaten der Kamera nicht erfolgen muß, falls die Kamera bereits mit einem entsprechenden Baustein ausgerüstet ist, so daß an ihrem Ausgang bereits digitalisierte Bilddaten anstehen.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen
- Fig. 1: eine schematische Übersicht der relativen Anordnung bzw. Verschaltung zwischen Kamera, Framegrabberschaltung, PCI-Bus und anschließenden Verarbeitungs-Darstellungs- oder Speichereinheiten,
- Fig. 2: ein Blockschaltbild der PCI-Framegrabberschaltung mit dazugehörigen Steuerungs- und Ein/Ausgabebaugruppen und
- Fig. 3: die Zeittakte des Datenstromes vom A/D-Wandler zum SCSI-Interface,
- Fig. 4: ein Blockschaltbild des Datenstromes im SCSI-Controller,
- Fig. 5: ein Blockschaltbild der Steuerlogik der Framegrabberschaltung,
- Fig. 6: einen Teilbaustein der Steuerlogik aus Fig. 5,
- Fig. 7: ein Signal- und Funktionsschaltbild der Steuerlogik und
- Fig. 8: die Zeitsteuersignale der Datenübernahme.

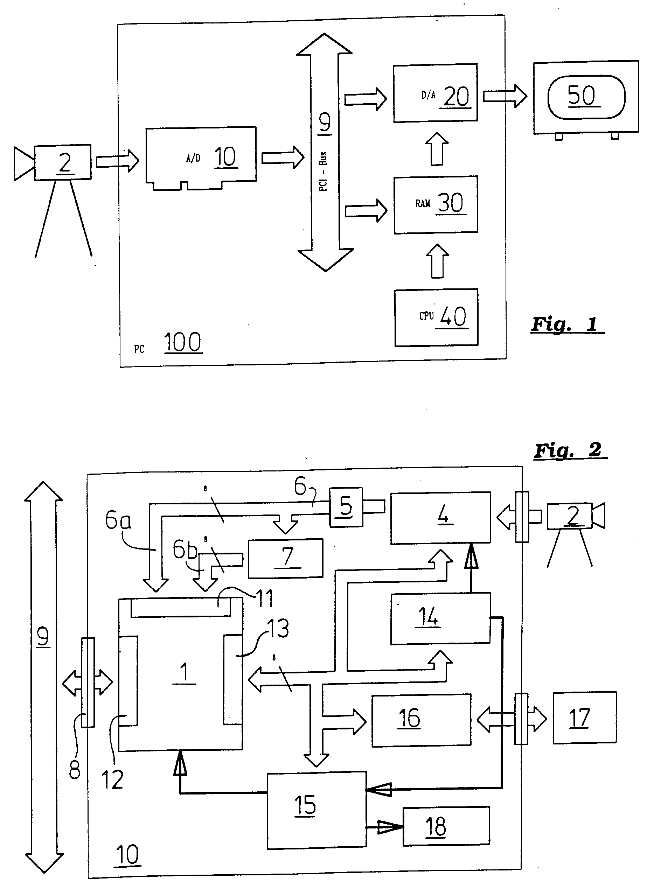

In Fig. 1 erkennt man links schematisch angedeutet eine Videokamera 2 und rechts einen Monitor 50, auf welchem die von der Videokamera aufgenommenen Bilder nach Möglichkeit in Echtzeit dargestellt werden sollen. Das Zwischenglied zwischen Kamera und Monitor ist ein PC mit PCI-Bus 9. Die wesentlichen Elemente, welche der PC auf jeden Fall aufweisen muß, sind in dem mit einem Rahmen 100 angedeuteten Feld wiedergegeben. Im einzelnen weist der PC eine CPU (zentrale Prozessoreinheit) 40, einen Arbeitsspeicher (RAM) 30 und eine Graphikkarte 20 auf, die einen Digital/Analogwandler enthält. Die Videokamera 2 ist mit dem Eingang der Framegrabberschaltung 10 verbunden, auf der zum einen eine Analog/Digitalwandlung der Daten stattfindet und die außerdem die digitalen Daten in einer Weise formatiert bzw. anordnet, daß sie über den PCI-Bus 9 entweder an den Arbeitsspeicher der CPU 40 oder über die Graphikkarte 20 auf den Monitor 50 gegeben werden.

Konkret wurde für die CPU ein Prozessor vom Typ Intel 486 DX/4 verwendet, der mit 100 MHz getaktet wird. Als Graphikkarte wurde eine Karte vom Typ Miro Crystal 20 SD mit dem Graphikchip S3 Vision 864 verwendet. Alternativ wurde auch eine Karte vom Typ Miro Crystal 20 SV mit dem Graphikchip S3 Vision 964 verwendet.

In Fig. 2 ist sozusagen ein vergrößerter Ausschnitt aus Fig. 1 dargestellt, der vom PC nur noch den PCI-Bus 9 zeigt und auf der anderen Seite die direkt mit der Framegrabberkarte 10 verbundene Videokamera 2. Die unter der Kamera 2 zusätzlich dargestellten externen Geräte 17 stellen nur Optionen dar und müssen nicht notwendigerweise vorhanden sein.

Wie man erkennt, besteht die PCI-Framegrabberschaltung in ihrem Kern aus einem SCSI-Controller 1 vom Typ NCR 53C825, welcher die eigentliche Schnittstelle zwischen den Videobilddaten und dem PCI-Bus 9 darstellt. Die von der Kamera 2 ausgehenden, analogen Bilddaten werden zunächst in einem A/D-Wandler 4 in einen digitalen Datenstrom umgewandelt, wobei jedem Bildpixel 8 Bit (1 Byte) zugeordnet werden, welche die Helligkeit des betreffenden Pixels in 256 Stufen repräsentieren.

Das PCI-Interface 12 des SCSI-Controllers 1 wird mit dem PCI-Bus 9 verbunden. Der SCSI-Controller 1 weist noch eine Erweiterungsschnittstelle 13 auf, die in Fig. 2 mit Memory-Bus bezeichnet ist, und die zur Steuerung des A/D-Wandlers 4, des entsprechenden Controllers 14 und anderer Bausteine verwendet wird.

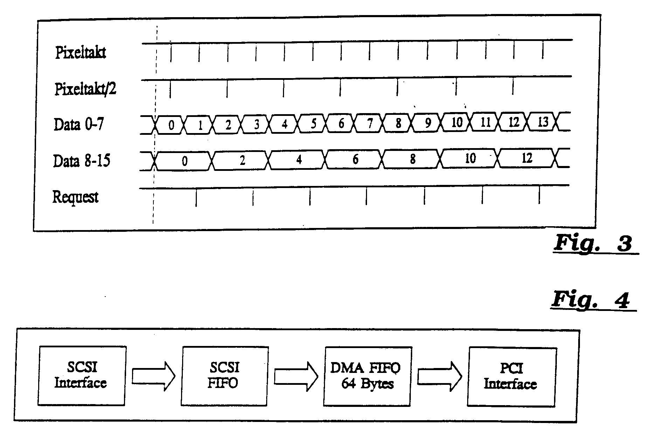

Die Framegrabberkarte wird insgesamt mit 10 bezeichnet. Die Kamera 2 wird mit einem Videoeingang 3 der Framegrabberkarte 10 verbunden, welcher unmittelbar in einen A/D-Wandler 4 führt. Von dort gelangen die digitalisierten Daten über eine 8 Bit breite Datenleitung 6 in einen FIFO-Pufferspeicher 5 von 1 KByte Tiefe. Dieser FIFO-Speicher wird über den Steueranschluß /SACK des SCSI-Controllers gesteuert. Jedes zweite Byte aus der Leitung 6 wird anschließend über ein Flip-Flop 7 ausgeblendet, so daß anschließend über zwei je 8 Bit breite Datenleitungen 6a und 6b am SCSI-Interface 11 des SCSI-Controllers 1 die Daten in 16 Bit Breite ankommen. Der Empfangstakt der SCSI-Schnittstelle des SCSI-Controllers braucht daher nur die Hälfte des Taktes der Datenleitung zu betragen, welche von dem A/D-Wandler am Eingang der Schaltung zu dem SCSI-Controller führt. Figur 3 zeigt das Timing der Bilddatenblöcke zwischen dem A/D-Wandler 4 und dem SCSI-Interface 11.

Das SCSI-Interface 11 enthält seinerseits noch einen weiteren FIFO-Pufferspeicher, der allerdings nur eine geringe Tiefe von einigen Byte aufweist. Zum Auslesen der Videodaten aus den Datenleitungen 6a und 6b wird nur der synchrone Takt des SCSI-Interface benutzt. Der Datenpfad innerhalb des SCSI-Controllers, hier vom Typ NCR 53C825, ist nämlich davon abhängig, ob synchron oder asynchron gesendet oder empfangen wird. Für die Zwecke der vorliegenden Erfindung wird nur das sogenannte "synchronous SCSI Receive" verwendet, da ausschließlich Daten vom SCSI-Bus empfangen und über den PCI-Bus an das gewünschte Ziel geschrieben werden. Um diesen Zustand des ausschließlich synchronen Empfangs zu erreichen, müssen bei dem hier verwendeten Chip NCR 53C825, entgegen der an sich vorgesehenen Verschaltung, sämtliche SCSI-Steuerleitungen mit Ausnahme der Leitungen /SREQ, /SIO und /SACK auf ein konstantes Potential gelegt werden, wobei hier ein 4,7 k-Pull-up-Widerstand verwendet wird, durch welchen die Leitungen auf die Versorgungsspannung V_{cc} gelegt werden. Die Eingänge /SIO, /SREQ und /SACK werden variabel von der Steuerlogik 15 geschaltet. Der interne Datenlauf im NCR-Chip (SCSI-Controller) 1 wird durch das Blockdiagramm gemäß Fig. 4 veranschaulicht. Das in Fig. 4 dargestellte DMA-FIFO ist 32 Bit weit und 16 Transfers tief. Es ist außerdem in vier Sektionen aufgeteilt. Dieses FIFO wird erst mit Daten vollgeschrieben, bevor der NCR-Chip den PCI-Bus anfordert und die Daten ans Ziel schreibt. Die Daten können wahlweise im Burstmodus mit 2, 4, 8 oder 16 Langwörtern (32 Bits) gesendet werden.

Der A-D-Controller 14 erzeugt aus dem Video Signale, z. B. die Synchronisationsimpulse (H- und V-Sync) und steuert damit den A/D-Wandler 4. Diese Signalleitungen werden auch von der programmierbaren Steuerlogik 15 benötigt, um aus diesen Signalen die Steuerinformationen zu erzeugen, mit welchen der SCSI-Controller 1 den Bus selbständig anfordert und die Bilddaten von SCSI-Bus in den PCI-Bus überträgt. Über einen Eingabe/Ausgabebaustein 16 können externe Geräte sowohl gesteuert werden (z. B. ein synchronisierter Blitz), und es können auch externe Geräte den PCI-Framegrabber steuern, das heißt zum Beispiel eine Bilderfassung mit Hilfe eines äußeren Signals von einem externen Gerät 17.

Der hier verwendete SCSI-Controller vom Typ NCR 53C825 ist ein PCI-Busmasterdevice, welches selbständig mit dem PCI-Bus 9 kommunizieren kann. über den Memory-Bus, an welchem normalerweise zum Beispiel ein BIOS-ROM angeschlossen wird, können die sich auf der Platine befindenden Bausteine programmiert und somit initialisiert werden. Dem Memory-Bus bzw. der Erweiterungsschnittstelle wird hierbei vom PCI-BIOS eine Adresse zugewiesen, so daß er transparent und linear in den 4 GByte-Speicherbereich eingeblendet wird und auf diese Weise direkt ansprechbar ist. Die Auswahl des jeweiligen Bausteines am Memory-Bus erfolgt über den Adressendekoder 18. Der SCSI-Controller NCR 53C825 besteht im wesentlichen aus folgenden Funktionsbereichen:
- Ein SCSI-Interface, welches sie Spezifikationen SCSI 1 und SCSI 2 (fast, wide) erfüllt,
- ein PCI-Busmaster-Interface mit einem 64 Byte DMA-FIFO,
- ein SCSI-Script-Processor, der den Datentransfer zwischen SCSI und PCI-Bus flexibel steuern kann,
- ein lokaler Memory-Bus inklusive Controller.

Des weiteren befindet sich in dem Chip noch ein 256 Byte großer Registersatz, von dem die unteren 128 Bytes die Konfigurations- und die oberen 128 Bytes die Operationsregister beinhalten.

Im übrigen kann bezüglich des hier verwendeten SCSI-Controllers auf die Datenblätter des Herstellers verwiesen werden, deren Inhalt hier durch diese Bezugnahme aufgenommen wird.

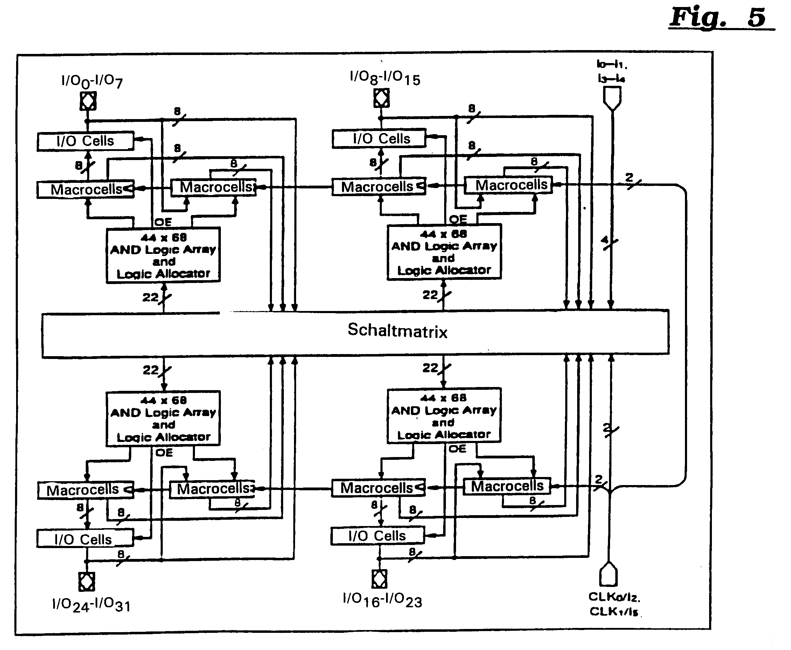

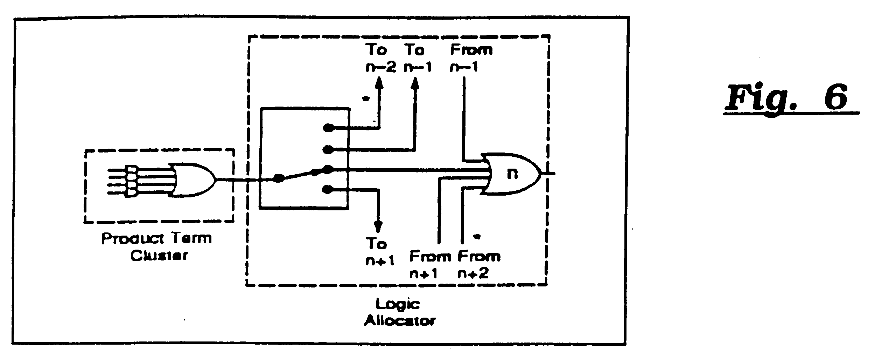

Die Steuerlogik 15 des PCI-Framegrabbers 10 wird in einen Chip (hier der Typ Mach 210 der Firma AMD) einprogrammiert. Die zugehörigen Figuren 5 und 6 sind dem Datenbuch des Herstellers "MACH Family Data Book", AMD 1992, entnommen.

Wie in Fig. 5 zu erkennen ist, besteht die Steuerlogik 15 aus vier gleichen Funktionsblöcken, die über eine Schaltmatrix miteinander verbunden sind. Jeder Funktionsblock verfügt über 22 Eingänge aus der Schaltmatrix, die auf ein 44 x 68 AND-Logikarray verzweigt werden. Hinter dem AND-Array befinden sich 16 sogenannte Product Term Cluster (PTC), wie sie in Fig. 6 dargestellt sind (ODER-Glied mit vier Eingängen). Der hier verwendete, 44polige Logikbaustein verfügt neben den Versorgungsanschlüssen über 32 freiprogrammierbare Ein- bzw. Ausgänge, sowie vier allgemeine und zwei Clock-Eingänge. Im wesentlichen besteht die Steuerlogik 15 für den PCI-Framegrabber aus den folgenden Funktionsblöcken:
1. Adressregister (AREG),
2. Start-Längen- und Command-Register (SREG, LREG, CREG),
3. Differenzierglieder zur Erzeugung von Steuersignalen (1 Takt lang),
4. 9 Bit-Zähler,
5. Erzeugung des Request-Signals für den SCSI-Controller (gültige Bilddaten),
6. Takterzeugung (zum Teil).

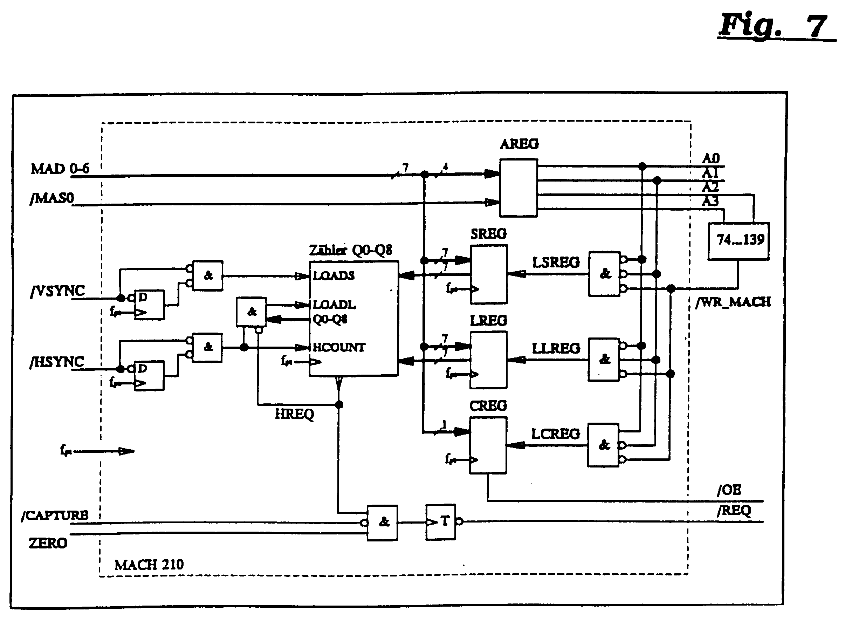

Mit Bezug auf das Funktions-Blockschaltbild der Steuerlogik 15 gemäß Figur 7 wird jetzt noch der Zeitablauf der Datenübernahme durch den SCSI-Controller 1 im Detail beschrieben. Der SCSI-Controller 1 übernimmt immer dann Daten vom SCSI-Bus (sofern entsprechend progammiert wurde), wenn eine negative Flanke auf dem SCSI-Steuereingang /SREQ vorliegt. Da nur bei jedem zweiten Pixeltakt je 16 Bit gültige Bilddaten am SCSI-Bus anliegen, muß ein Request-Signal mit dem halben Pixeltakt die Datenerfassung steuern. Die Zeitfenster, zu welchen gültige Daten am SCSI-Bus anliegen, werden durch die Signale HREQ, /CAPTURE und ZERO bestimmt.
- HREQ:: Mit dem HREQ-Signal kann, wie bereits beschrieben, ein Vertikalfenster (gültige Bildzeilen am SCSI-Bus) generiert werden. Während HREQ in der Steuerlogik erzeugt wird, stammen die beiden anderen Signale aus dem BT261.
- /CAPTURE:: Das /CAPTURE-Signal wechselt seinen Zustand immer mit dem Vertikal-Synchronsignal, d. h. es ist mindestens ein Halb- bzw. ein Vollbild lang. Diese Eigenschaft kann dazu benutzt werden, um gültige Bilder zum Beispiel für Einzelbildaufnahmen zu kennzeichnen.
- ZERO:: Das ZERO-Signal ist direkt über das Registerpaar ZERO-Start und ZERO-Stop (äquivalent zum Start- und Längenregister im MACH 210) in den BT261 programmierbar. Das ZERO-Signal ist hierbei innerhalb einer Bildzeile zwischen dem angegebenen Start- und Endwert aktiv. Es kann demnach als Horizontal-Fenster zur Kennzeichnung von gültigen Pixeln (Bildpunkten) benutzt werden.

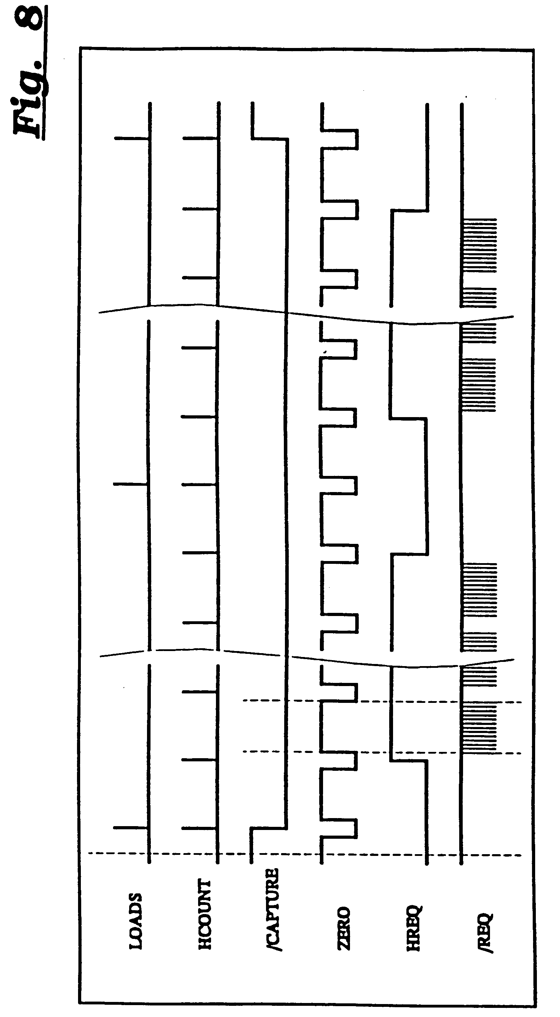

Das komplette Timing ist in Fig. 8 dargestellt, wobei leicht zu erkennen ist, daß die Daten nur abgefragt werden, wenn alle drei Fenster signalaktiv sind. Hierdurch wird sichergestellt, daß nur definierte Bilddaten vom SCSI-Bus übernommen werden.

Der A/D-Controller 14 dient hauptsächlich zur Erzeugung der Synchronisationsimpulse aus dem Videosignal. Über einen im A/D-Wandler integrierten SYNC-Detektor werden gleichzeitig die Sychronisationssignale separiert und auf den Videoeingang des A/D-Controllers 14 geschaltet. Das Vertikal-Synchronsignal wird direkt aus den Videosynchronimpulsen abgetrennt. Das Horizontal-Synchronsignal HSYNC wird erst noch generiert und ist abhängig vom eingestellten Pixeltakt, der mit Hilfe der Synchron-Signale und eines externen Taktes erzeugt wird, und zwar je nach gewünschter Anzahl der Pixel pro Bildzeile (maximal 4096).

Abschließend werden noch einige in der konkret hergestellten und getesteten Ausführungsform verwendete Bausteine der Framegrabberkarte wiedergegeben, die sich als voll funktionsfähig erwiesen hat.
- SCSI-Controller 1:: NCR 53C825
- AD-Wandler:: 4 Brooktree BT252
- AD-Controller:: 14 Brooktree BT261
- Flip-Flop:: 7 74AIS574
- Steuerlogik:: 15 MACH 210 (AMD)
- Adressdekoder:: 1874LS139
- Ein/Ausgabebaustein:: 16 Zilog CIO Z8536

Auf die von den Herstellern der vorgenannten Bauelemente bekanntgegebenen und auf die sonst allgemein bekannten technischen Merkmale dieser Bauelemente wird im Rahmen der vorliegenden Patentanmeldung in vollem Umfang Bezug genommen. Die entsprechenden Merkmale sind insoweit als in der vorliegenden Anmeldung offenbart anzusehen.

Mit der erfindungsgemäßen Framegrabberkarte ist es möglich, einen herkömmlichen PC mit PCI-Bus für eine Darstellung von Videobildern in Echtzeit mit relativ hoher Auflösung bei einem vergleichsweise geringen Kostenaufwand zu verwenden. Ein herkömmliches System vergleichbarer Leistung erfordert einen erheblich größeren Kosten- und Entwicklungsaufwand.

Im vorliegenden Fall ist das gesamte System in einem Ausführungsbeispiel mit einem PC realisiert worden, der einen mit 100 MHz getakteten Prozessor vom Typ Intel 486/DX4 aufwies und der unter dem Betriebssystem OS/2 lief. Inzwischen ist die erfindungsgemäße Framegrabberkarte ebenso erfolgreich auch in anderen Hardwareumgebeungen getestet worden.

## Patentansprüche

1. Verfahren zum Erfassen und Weiterleiten von Videobilddaten mittels eines Personal Computers (PC) mit PCI-Bus, wobei die Daten mit Hilfe einer PCI-Framegrabber-Schaltung erfaßt und über den PCI-Bus im wesentlichen in Echtzeit in den Hauptspeicher des PC und/oder über eine Graphikschaltung an einen Monitor weitergeleitet werden, **dadurch gekennzeichnet**, daß in oder vor der Framegrabberschaltung der 8 Bit breite digitale Bilddatenstrom auf die doppelte Breite von 16 Bit gebracht wird, daß für die Aufnahme und Übertragung des 16 Bit breiten Datenstromes zum PCI-Bus ein Standard SCSI-Controller verwendet wird und daß bei der Aufnahme der Daten durch den SCSI-Controller nur der synchrone Empfangstakt verwendet wird.

2. Verfahren nach Anspruch 1, **dadurch gekennzeichnet**, daß das SCSI-Protokoll des SCSI-Controllers bei der Datenaufnahme umgangen wird.

3. Verfahren nach Anspruch 1 oder 2, **dadurch gekennzeichnet**, daß Peripherie-Bausteine, wie A/D-Wandler, A/D-Controller und Ein-/Ausgabe-Baustein über eine Erweiterungsschnittstelle des SCSI-Controllers gesteuert werden.

4. PCI-Framegrabberschaltung für das Erfassen und Weiterleiten von Videobilddaten, mit einem Video-Eingang, einem A/D-Wandler und einem A/D-Controller für das Umwandeln der eingehenden analogen Videosignale in digitale Signale, einem PCI-Bus-Interface und einem Baustein für die Formatierung der digitalisierten Daten zu PCI-kompatiblen Daten, **dadurch gekennzeichnet**, daß der Baustein für die Formatierung der digitalisierten Daten zu PCI-kompatiblen Daten ein Standard SCSI-Controller ist, der ein Eingangsinterface mit mindestens 16 Bit Breite und einem synchronen Empfangstakt hat.

5. Schaltung nach Anspruch 4, dadurch gekennzeichnet, daß der SCSI-Controller eine z. B. für EPROMS vorgesehene Erweiterungsschnittstelle aufweist.

6. Schaltung nach Anspruch 4 oder 5, **dadurch gekennzeichnet**, daß der SCSI-Controller vom Typ NCR 53C825 ist.

7. Schaltung nach einem der Ansprüche 4 bis 6, **dadurch gekennzeichnet**, daß die SCSI-Steuerleitungen mit Ausnahme von /SREQ, /SIO und /SACK auf ein konstantes Potential gelegt sind.

8. Schaltung nach Anspruch 7, **dadurch gekennzeichnet**, daß die SCSI-Steuerleitungen mit Ausnahme von /SREQ, /SIO und /SACK vorzugsweise über einen pull-up-Widerstand auf V_{cc} gelegt sind.

9. Schaltung nach einem der Ansprüche 4 bis 8, **dadurch gekennzeichnet**, daß für eine Verbindung mit externen Geräten, wie z. B. ein Blitzlichtgerät oder eine Kamerasteuerung, ein I/O-Baustein vorgesehen ist, der ebenfalls von der Erweiterungsschnittstelle gesteuert wird.
